(19) Europäisches Patentamt
European Patent Office
Office européen des brevets

(11) **EP 4 550 214 A1**

(12) **EUROPÄISCHE PATENTANMELDUNG**

(43) Veröffentlichungstag:
**07.05.2025  Patentblatt 2025/19**

(21) Anmeldenummer: **24207361.7**

(22) Anmeldetag: **18.10.2024**

(51) Internationale Patentklassifikation (IPC):
**G06N 3/0475** *(2023.01)*    **G06N 3/09** *(2023.01)*

(52) Gemeinsame Patentklassifikation (CPC):
**G06N 3/0475; G06N 3/09**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität:  **02.11.2023  DE 102023130253**

(71) Anmelder: **Deutsche Telekom AG**
**53113 Bonn (DE)**

(72) Erfinder: **BAU, Wolfgang**
**53639 Königswinter (DE)**

(74) Vertreter: **Braun-Dullaeus Pannen Emmerling Patent- & Rechtsanwaltspartnerschaft mbB Platz der Ideen 2 40476 Düsseldorf (DE)**

(54)  **TECHNIKEN ZUM VERBESSERN EINER KÜNSTLICHEN INTELLIGENZ**

(57)    Die vorliegende Erfindung betrifft Techniken zur Verbesserung von Modellen einer künstlichen Intelligenz, insbesondere einer generativen AI, umfassend die folgenden Schritte:
• Vorhalten eines Modells f einer künstlichen Intelligenz, wobei das Modell f trainiert werden soll, insbesondere zum Erzeugen einer neuen Version;
• Vorhalten von Datensätzen zum Trainieren des Modells f;

• Analysieren der Datensätze im Hinblick auf Ihre Geeignetheit für das Training durch einen Algorithmus oder die künstliche Intelligenz;
• Verwerfen oder niedrigeres Gewichten eines Datensatzes, falls der Algorithmus oder die künstliche Intelligenz feststellt, dass der Datensatz von der künstlichen Intelligenz oder einer anderen künstlichen Intelligenz erzeugt wurde oder der Datensatz Überschneidungen mit anderen Datensätzen aufweist.

Fig. 1

EP 4 550 214 A1

**Beschreibung**

Die vorliegende Erfindung betrifft Techniken zur Verbesserung von Modellen einer künstlichen Intelligenz.

In dem folgenden Text wird aufgrund seiner häufigen Verbreitung sowohl der englische Begriff AI (Artificial Intelligence) als auch der deutsche Begriff KI (künstliche Intelligenz) verwendet. Beide Begriffe sind dem Fachmann auf dem Gebiet geläufig. Ebenso werden die dem Fachmann geläufigen englischen Begriffe machine learning (ML) und deep learning (DL) verwendet.

Eine sogenannte generative AI generiert auf Fragen an die entsprechende generative AI Applikation Antworten, auch als neu formulierte Aussagen bezeichnet, zumindest teilweise basierend auf den Datenquellen, die der AI während ihrer Trainingsphase bereitgestellt wurden. Ein bekanntes Beispiel ist ChatGPT, eine generative AI Applikation mit einem Large Language Model (LLM), das in der Version GPT 3.5 über 175 Milliarden Parameter und 800 GB an Speicherkapazität besitzt.

Generative AIs können mittels DL unterschiedliche Datentypen, wie beispielsweise Sprachtexte, Textdaten, Audiodateien, Bilder und Ähnliches, zum Lernen verwenden und auch unterschiedliche Datentypen bei der generierten Ausgabe erzeugen. Zumeist wird dies im Kontext dieser Erfindung beispielhaft durch die Verwendung von Textdateien als Input und Textdateien als Output beschrieben. Eine Besonderheit bei "Text Input zu Text Output" ist eine Übersetzung zwischen zwei Sprachen. Hierbei werden die vorgenannten LLM basierend auf Deep Learning und generativer AI genutzt. Diese LLM Sprachanwendungen haben die Besonderheit, dass sie je nach genutzter Sprache aktuell bereits eine sehr hohe Qualität besitzen im Vergleich zu Text zu Text Übersetzung. Je nach verwendeter Sprache wird in der Regel auch eine unterschiedliche Qualität der Antworten resultieren.

Wenn generative AI eines DL Subsystems genutzt wird, so werden in der Lernphase nur Daten genutzt, die vorab nicht gekennzeichnet sind - dies ist das sogenannte "unsupervised learning", welches dadurch ausgezeichnet ist, dass beispielsweise die verwendeten Daten keine Attribute zur Sortierung aufweisen. ML ist ein Subset von AI und DL ist ein Subset von ML. DL kann im Gegensatz zu ML ein künstliches neuronales Netzwerk nutzen und damit in der Regel wesentlich komplexeren Input auswerten. Generatives AI ist ein Subset von DL.

Man kann zumindest zwei verschiedene DL unterscheiden. Entweder ist der DL Typ ein "Discriminative Type" oder ein "Generative Type". Die Discriminative Types haben vorwiegend die Aufgabe einer Klassifizierung zum Beispiel ein Hundebild als ein Hund zu erkennen, wobei der Generative Type nicht klassifiziert, sondern neue Daten erzeugt, also beispielsweise ein neuartiges Hundebild.

Der Generative Type des DL hat in der Regel folgende Eigenschaften:

- Generierung neuer Daten, die in der Regel ähnlich (und nicht identisch) zu den Daten sind, mit denen der Generative Type in der Lernphase des Modells trainiert wurde;

- das Generative Type Modell berücksichtigt eine Verteilung der Daten und wie wahrscheinlich ein gegebenes Beispiel ist;

- Vorhersagefähigkeit eines folgenden Wortes in einer bestehenden Sequenz von Wörtern einer natürlichen Sprache;

Eine von der generativen AI ausgegebene Antwort, beispielsweise in Textform, basiert auf einer Wortsequenz, die derart gebildet wurde, dass ein Folgewort immer das wahrscheinlichste Wort basierend auf der Sequenz der bisherigen Worte ist. Zu diesem Zweck wird eine Wahrscheinlichkeit des möglichen Folgeworts von dem in der Lernphase erzeugten statistischen Modell $f(x)$ ermittelt, wobei x die Daten der Lernphase sind und $y = f(x)$ die generierte Antwort auf eine Anfrage (promt). In diesem Sinne kann $y = f(x)$ auch als Output bezeichnet werden.

Bei einer nicht Generative AI kann es sich bei dem Output um Zahlen, diskrete Eigenschaften, Klassifizierungen und Wahrscheinlichkeiten handeln, wobei die Generative AI als Output eine natürliche Sprache, ein Bild und/oder ein Audiosignal erzeugen kann.

Hierbei kann folgende Problemstellung auftreten: das statistische Modell $f()$ der generativen AI umfasst also Wahrscheinlichkeiten zur Vervollständigung von bisherigen Wortsequenzen und diese Wahrscheinlichkeiten basieren zum einen auf dem verwendeten künstlichen neuronalen Netzwerk und zum anderen auf den Daten der Lernphase. Das statistische Modell wird Antworten auf jede mögliche Anfrage (Promt) generieren und zu diesen Antworten kann - bei fehlendem geeigneten Input in der Lernphase - auch die Antwort gehören "zu xxx weiß ich nichts sicheres, da ich dazu nicht ausreichend trainiert wurde".

Die Daten der Lernphase können aber auch zu einem Qualitätsproblem bei der Generierung der Antworten führen, wenn sich identische o. ä. Textsequenzen in zu großer Anzahl in den Daten der Lernphase befinden, wobei diesen Textsequenzen dann im Gegensatz zu anderen Textsequenzen eine zu hohe Wahrscheinlichkeit zugeordnet wird. Als extremes Beispiel: in fünf Texten, die für das Training verwendet werden, könnte die Information stehen, dass die Hauptstadt von Kanada Calgary ist und nur in einem Text, dass die Hauptstadt von Kanada Ottawa ist. Aufgrund dieses falschen Trainings würde die generative AI auf die Frage, was die Hauptstadt von Kanada ist, fälschlicherweise Calgary ausgeben. Dieses Problem ähnelt einem Over-Fitting in der statistischen Datenanalyse. Ein weiteres Beispiel ist das Trainieren einer Zahl; beispielsweise kann der generativen AI als Input ein Bild einer 9, welches in 784 Pixel zerlegt ist übergeben werden. Jedem dieser Pixel wird eine Wahrscheinlichkeit zugewiesen, wobei diese Werte in verschiedenen Schichten des künstlichen neuronalen Netzwerks durch f(x) miteinander in Bezug gesetzt werden, wodurch der Output erzeugt wird.

Für in ihrem Kontext richtige Wortsequenzen ist ein vielfacher identischer Input in der Lernphase durchaus hilfreich. Für in ihrem Kontext falsche Wortsequenzen - allgemeiner falscher Informationen - aber schädlich, da hierdurch diese falschen Sequenzen zu hoch gewichtet werden.

Es ist nun die Aufgabe der Erfindung, Techniken bereitzustellen, sodass die Aussagekraft und die Qualität der Antworten und/oder die Aktionen einer künstlichen Intelligenz, insbesondere einer generativen AI, verbessert wird. Unter Antworten wird in der Regel die Rückgabe eines Bedeutungsinhaltes verstanden, wobei eine Aktion beispielsweise sein kann, dass die künstliche Intelligenz ein bestimmtes IoT Gerät ansteuert oder andere Befehle ausführt.

Hierbei liegt der Erfindung die Erkenntnis zugrunde, dass es hierfür vorteilhaft ist, die Güte der Datenquelle zu kennen, diese gegebenenfalls kontrollieren zu können, um insbesondere auch solche Datenquellen auszuschließen, die überlappende Bedeutungsinhalte, insbesondere Wortsequenzen aufweisen um eine zu starke Gewichtung der entsprechenden Informationen zu verhindern.

Dies ist insbesondere wichtig und wird zunehmend wichtiger, da die Modelle f() ständig neutralisiert werden unter Hinzunahme neuer Datenquellen und eben auch solcher Datenquellen, die von den generativen AIs selbst erzeugt werden. Sind allerdings die von den generativen AIs erzeugten Datenquellen fehlerhaft, trainieren sich die generativen AIs immer wieder selbst mit fehlerhaften Datenquellen, wobei sich dieses Problem zunehmend verstärkt, da immer mehr Daten eben von künstlichen Intelligenzen erzeugt werden.

Mathematisch könnte man dies wie folgt formulieren, das Modell der generativen AI $f() = f(x, x_{AI})$, wobei x nicht AI basierte Datenquellen sind und $x_{AI}$ die durch eine AI erzeugten Datenquellen, wobei beide zum Training des Modells verwendet werden. Der Einfluss von schlechten Daten $x_{AI}$ erzeugt durch eine AI, wird somit die Qualität des Modells und zukünftiger Versionen negativ beeinflussen. Antworten einer AI mit minderwertigem Wahrheitsgehalt können als Halluzinationen bezeichnet werden.

Demnach ist es eine weitere bevorzugte Aufgabe der Erfindung solche Halluzinationen zu vermeiden.

Die vorliegende Erfindung löst diese Aufgabe durch die unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein Verfahren zur Verbesserung von Modellen einer künstlichen Intelligenz angegeben, insbesondere einer generativen AI, umfassend die folgenden Schritte:

- Vorhalten eines Modells f einer künstlichen Intelligenz, wobei das Modell f trainiert werden soll, insbesondere zum Erzeugen einer neuen Version;

  o das Modell kann beispielsweise auf einem Computersystem, insbesondere auf einem Server vorgehalten sein, indem es auf diesem Server implementiert ist; prinzipiell kann es sich um die allererste Trainingsphase des Modells f handeln, das Modell f kann aber auch schon trainiert sein, wobei das erneute Training zu einer Verbesserung des Modells führen soll, insbesondere indem die neue Version erzeugt wird;

- Vorhalten von Datensätzen zum Trainieren des Modells f;

  o die Datensätze können ebenfalls auf dem Computersystem hinterlegt, insbesondere auf dem Server abgespeichert sein. Es ist aber auch möglich, dass es sich um ein verteiltes Computersystem handelt, wobei der Server beispielsweise mittels geeigneter Schnittstellen auf Datenbanken zugreift in denen die Datensätze zum Training hinterlegt sind. Dies kann den Vorteil haben, dass verschiedene künstliche Intelligenzen prinzipiell auf dieselben Trainingsdatensätze zurückgreifen können;

  o bei den Datensätzen kann es sich um Textdaten, Bilddaten, Audiodaten, Programmcode und/oder Videodaten handeln. Die künstliche Intelligenz kann diese Daten als Input verwenden und auch diese diversen Datentypen und auch eine beliebige Kombination dieser Datentypen als Output ausgeben. Auch wenn die Erfindung nachstehend im Wesentlichen im Zusammenhang mit Textdaten beschrieben ist, soll dies keine Beschränkung der Erfindung darstellen;

- Analysieren der Datensätze im Hinblick auf Ihre Geeignetheit für das Training durch einen Algorithmus oder die künstliche Intelligenz;

  o unter Geeignetheit wird im Wesentlichen verstanden, dass die Datensätze eine Güte aufweisen, sodass, wenn die künstliche Intelligenz mit ihm trainiert wird, sich die Qualität der künstlichen Intelligenz verbessert. Prinzipiell kann eine Analyse der Datensätze durch einen funktionalen Algorithmus durchgeführt werden, der eingerichtet ist gewisse Merkmale der Datensätze zu erkennen und zu bewerten oder aber durch die künstliche Intelligenz selbst oder eine weitere künstliche Intelligenz, die entsprechend trainiert sind geeignete von ungeeigneten Datensätzen zu unterscheiden. Beispielsweise ist eine künstliche Intelligenz in der Lage die Datensätze dahingehend zu unterscheiden, aus welcher Quelle sie stammen oder wie deren semantischer Aufbau ist. Dies kann der künstlichen Intelligenz in der Trainingsphase beigebracht werden, indem beispielsweise Datensätze von Quellen übergeben werden, die einmal als geeignet und einmal als ungeeignet markiert sind;

- Verwerfen oder niedrigeres Gewichten eines Datensatzes, falls der Algorithmus oder die künstliche Intelligenz feststellt, dass der Datensatz von der künstlichen Intelligenz oder einer anderen künstlichen Intelligenz erzeugt wurde oder der Datensatz, insbesondere inhaltliche, Überschneidungen mit anderen Datensätzen aufweist.

Dies führt zu dem Effekt, dass die Güte des Trainings der künstlichen Intelligenz verbessert wird, da Datensätze, die von der künstlichen Intelligenz oder einer anderen künstlichen Intelligenz erzeugt wurden Fehler aufweisen können, und in der Regel noch schlechter als andere Datenquellen sind, wodurch verhindert wird, dass diese ungeeigneten Datensätze quasi in einem selbstverstärkenden System immer wieder verwendet werden, um die künstliche Intelligenz zu trainieren. Ähnliches gilt für die Überschneidungen, wobei hierbei insbesondere inhaltliche Überschneidungen zu verstehen sind, die sonst relativ zu anderen Inhalten zu stark gewichtet werden würden. Diese haben zudem den anderen vorteilhaften Effekt, dass die Datensätze, die zum Training verwendet werden effektiv reduziert werden.

Die Unterscheidung zwischen verwerfen oder niedrigerer Gewichten ergibt den Vorteil, dass beim Zweiten ein Fachmann, der für das Trainieren der künstlichen Intelligenz verantwortlich ist, flexibel entscheiden kann, ob es zu einer besseren Güte des Modells f führt, je nachdem welche Alternative verwendet wird. So ist es beispielsweise möglich, ein erstes neues Modell f zu trainieren und alle ungeeigneten Daten zu verwerfen und ein zweites neues Modell f zu trainieren und die ungeeigneten Daten entsprechend anders zu gewichten. Die Güte des ersten neuen Modells f kann dann im Vergleich zu dem zweiten neuen Modell f überprüft werden, indem sie beispielsweise an einem sogenannten Ground-Truth Datensatz getestet wird. Insbesondere wird hierdurch auch ein automatisches Testen in der Art ermöglicht, dass ein neues Modell f so lange unter Variation der Gewichtungen neu getestet wird, bis das Modell das bestmögliche Ergebnis zeigt. Dieses neue Modell f mit dem bestmöglichen Ergebnis kann dann als neue Version der künstlichen Intelligenz verwendet werden.

In vorteilhafter Weise ist anhand einer digitalen Signatur des Datensatzes feststellbar, dass der Datensatz von der künstlichen Intelligenz oder der anderen künstlichen Intelligenz erzeugt wurde. Hierbei weist die digitale Signatur insbesondere ein Datenfeld auf, dass den Datensatz als von einer künstlichen Intelligenz erzeugt kennzeichnet. Der Datensatz muss nicht notwendigerweise von der künstlichen Intelligenz selbst stammen, sondern kann auch von einer anderen künstlichen Intelligenz erzeugt worden sein. Die digitale Signierung weist alle bekannten Sicherheitsmerkmale einer digitalen Signierung auf, nämlich, dass zumindest feststellbar ist, ob die signierten Daten verändert wurden und bevorzugt, dass ein verändern der signierten Daten nicht möglich ist. Im Falle von veränderten Daten, würden diese für das Training ebenfalls bevorzugt verworfen werden.

Dies hat den Vorteil, dass ein sicheres Kriterium bereitgestellt wird, um den Datensatz als von einer künstlichen Intelligenz erzeugt erkennen zu können.

Vorzugsweise signiert die künstliche Intelligenz oder die andere künstliche Intelligenz den Datensatz, insbesondere direkt bei seiner Erzeugung.

Dies hat den Vorteil, dass der Datensatz nicht in Netzwerke bzw. in Datenströme gelangen kann, ohne dass dieser signiert wird. Dies verhindert also, dass der Datensatz beispielsweise doch für das Training verwendet werden würde, weil ihm die entsprechende digitale Signatur fehlt.

In einer bevorzugten Ausführungsform signiert die künstliche Intelligenz oder die andere künstliche Intelligenz den Datensatz nur dann, wenn dieser abgespeichert wird und/oder wenn die ausgegebene Antwort die den Datensatz zugrunde liegt abgespeichert wird. Die Antwort kann einem Nutzer, der eine Anfrage an die künstliche Intelligenz gestellt hat beispielsweise lediglich auf dem Bildschirm angezeigt oder per Audio Wiedergabe wiedergegeben werden, und dass diese Daten abgespeichert werden, hierunter zu verstehen ist, dass ein temporäres Zwischenspeichern zur Wiedergabe nicht unter das dauerhafte Abspeichern zu subsumieren ist.

Dies hat den Vorteil, dass die Signatur nur mit solchen Datensätzen verknüpft wird, die tatsächlich als mögliche Datensätze für das Training infrage kommen. Eine Wiedergabe auf dem Lautsprecher wird in der Regel nach der Wiedergabe "verschwunden" sein.

In einer bevorzugten Ausführungsform weist die digitale Signatur eine minimale Datengröße auf. Dies kann beispielsweise dadurch erreicht werden, dass aus einer Vielzahl prinzipiell verwendbarer digitaler Signaturen diejenige ausgewählt wird, die die kleinste Datengröße aufweist. Unter Umständen kann dies noch mit Randbedingungen bezüglich der Sicherheit verknüpft werden. Auch unter diesen Randbedingungen ist es allerdings möglich, aus einer Vielzahl prinzipiell verwendbarer digitalen Signaturen, diejenige mit der kleinsten Datengröße auszuwählen.

Dies hat den Vorteil, dass Datensätze und/oder Netzwerkressourcen effizient geschont werden, da bei der Vielzahl von Signaturen mit denen durch das Signieren der Datensätze zu rechnen ist, das Verwenden der Signatur mit der minimalen Datengröße insgesamt zu einer erheblichen Datenreduktion führt.

Vorzugsweise wird die digitale Signatur von einer Trust Agency an den Betreiber der künstlichen Intelligenz oder einer anderen künstlichen Intelligenz geliefert.

Dies hat den Vorteil, dass der digitalen Signatur in dem Analyseschritt "vertraut" werden kann.

In einer bevorzugten Ausgestaltung der Erfindung ermittelt der Algorithmus oder die künstliche Intelligenz für den Datensatz, insbesondere einen Datensatz ohne Signatur, einen KI-Wahrscheinlichkeitswert, wobei der KI-Wahrscheinlichkeitswert angibt, mit welcher Wahrscheinlichkeit der Datensatz von der künstlichen Intelligenz oder einer anderen künstlichen Intelligenz erzeugt wurde, wobei der Datensatz verworfen oder niedriger gewichtet wird, wenn der KI-Wahrscheinlichkeitswert einen Schwellenwert überschreitet.

Falls nicht alle Als ihre Datensätze signieren und weil in den Netzwerken und Datenbanken schon zahlreiche unsignierter Datensätze vorhanden sind, können der Algorithmus und oder die künstliche Intelligenz entsprechend eingerichtet und/oder trainiert sein, um den KI-Wahrscheinlichkeitswert zu berechnen. Dem Algorithmus können bestimmte Merkmale bekannt gemacht werden, die in Datensätzen vorkommen und die typisch sind, wenn diese Datensätze von einer künstlichen Intelligenz erstellt wurden. Beispielsweise können diese Datensätze Schlüsselwörter wie beispielsweise "Siri" aufweisen, die der Nutzer gebraucht um die AI zu aktivieren. Die künstliche Intelligenz kann beispielsweise mit Datensätzen trainiert werden, wobei diese Datensätze als von einer künstlichen Intelligenz stammend oder nicht von einer künstlichen Intelligenz stammend markiert sind. Sowohl der Algorithmus als auch die künstliche Intelligenz geben dann den entsprechenden KI-Wahrscheinlichkeitswert heraus. Der Schwellenwert kann insbesondere von dem Nutzer festgelegt werden, insbesondere auch in Abhängigkeit des zu trainierende Skills der künstlichen Intelligenz, sodass flexibel festgelegt werden kann wie sensitiv die Datensätze gefiltert werden. Auf vorteilhafte Weise wird hierdurch also auch ermöglicht, Datensätze als von einer künstlichen Intelligenz stammend zu detektieren, selbst wenn diese nicht signiert sind.

Bevorzugt ermittelt der Algorithmus oder die künstliche Intelligenz für den Datensatz, insbesondere einen Datensatz ohne Signatur, einen Wiederholungs-Wahrscheinlichkeitswert, wobei der Wiederholungs-Wahrscheinlichkeitswert angibt, mit welcher Wahrscheinlichkeit der Datensatz eine inhaltliche Wiederholung mit den anderen Datensätzen aufweist, wobei der Datensatz verworfen oder niedriger gewichtet wird, wenn der Wiederholungs-Wahrscheinlichkeitswert einen Schwellenwert überschreitet.

Auch dies bietet wiederum den Vorteil, dass auf flexible Art und Weise festgelegt werden kann, wie sensitiv die Datensätze im Hinblick auf einen wiederholten Inhalt gefiltert werden können.

In einer bevorzugten Ausführungsform wird eine Entscheidung über das Verwerfen oder das niedrigere Gewichten in Abhängigkeit von dem Skill der künstlichen Intelligenz getroffen wird, der trainiert werden soll. Insbesondere werden bei einem Skill bei dem eine fehlerhafte Antwort kritischer ist, die Datensätze restriktiver, also insbesondere vermehrt, gefiltert. Beispielsweise können bei sicherheitsrelevanten Hausautomatisierungs-Skills, Skills, die mit geschäftlichen Transaktionen zusammenhängen usw., die Datensätze stärker gefiltert werden. Geht es beispielsweise bei dem Training um die automatische Erzeugung von Bildern, beispielsweise im Anwendungsfall von künstlerischen Antworten, kann weniger stark gefiltert werden.

Dies bietet also den Vorteil, dass die Größe des Datensatzes Skill-bezogen gefiltert werden kann.

Gemäß einem zweiten Aspekt der Erfindung ist ein Computersystem zur Verbesserung von Modellen einer künstlichen Intelligenz angegeben, wobei das Computersystem eingerichtet ist zur Ausführung der Schritte des vorhergehenden beschriebenen. Insbesondere kann das Computersystem einen Server aufweisen auf dem das Modell f der künstlichen Intelligenz und/oder der Algorithmus implementiert ist und auf dem die Datensätze abgespeichert sind. Es ist allerdings auch möglich, dass die Datensätze beispielsweise in Datenbanken hinterlegt sind und der Server über geeignete Schnittstellen auf die Datenbanken zurückgreift.

Die Vorteile dieses erfindungsgemäßen Computersystems sind im Wesentlichen analog zu denen, die im Zusammenhang mit dem Verfahren beschrieben wurden.

Gemäß einem dritten Aspekt der Erfindung ist eine künstliche Intelligenz, beispielsweise insbesondere als generative AI implementiert auf einem Server angegeben, wobei die künstliche Intelligenz eingerichtet ist von ihr erzeugte Datensätze bei der Erstellung dieser Datensätze zu signieren, wobei die Signatur ein Datenattribut aufweist, das aussagt, dass der Datensatz von der künstlichen Intelligenz erzeugt wurde.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitende Figur erläutert:

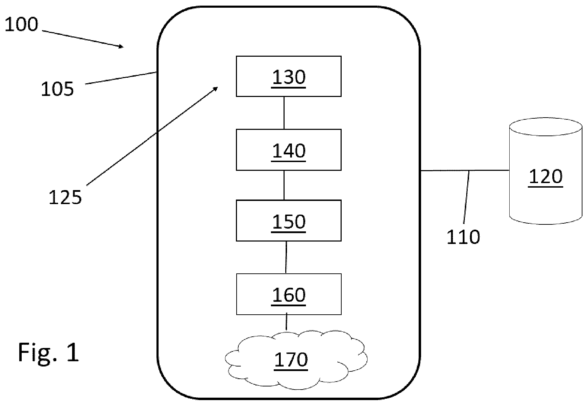

Fig. 1:     zeigt das erfindungsgemäße Computersystem zur Verbesserung des Outputs einer künstlichen Intelligenz.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Eine künstliche Intelligenz, insbesondere eine generative AI, kann beispielsweise folgende Bereiche abdecken:

- Textbasiert: Marketinginhalte verarbeiten, Verkaufsinhalte verarbeiten, Kundensupport, Schreibfähigkeiten, Notizen erstellen;

- Programmierung: Erstellen eines Codes, dokumentieren eines Codes, Text zu SQL, Webapplikation builder;

- Grafiken: Erzeugung, mediale Werbung; Design;

- Sprache: Sprachsynthese und Spracherkennung, Text-to-Speech, Speech-to-Text;

- Video: Videobearbeitung und Videoerzeugung;

- 3D: 3D Modelle erstellen und bearbeiten;

- Andere: Gaming, RPA, Musik, Audio.

Fig. 1 zeigt das erfindungsgemäße Computersystem 100 zur Verbesserung des Outputs einer künstlichen Intelligenz.

Das Computersystem 100 weist einen Server 105 auf und eine Datenbank 120 auf der Trainingsdaten für ein Modell f einer künstlichen Intelligenz 170 vorgehalten sind. Die Datenbank 20 kann in den Server 105 integriert sein oder aber über entsprechende Schnittstellen 110 mit der Datenbank 120 kommunizieren.

Auf dem Server 105 ist das Verfahren 125 implementiert, dass die folgenden Schritte aufweist:

Schritt 130: Vorhalten eines Modells f einer künstlichen Intelligenz, wobei das Modell f trainiert werden soll, insbesondere zum Erzeugen einer neuen Version;

Schritt 140: Vorhalten von Datensätzen zum Trainieren des Modells f;

Schritt 150: Analysieren der Datensätze im Hinblick auf Ihre Geeignetheit für das Training durch einen Algorithmus oder die künstliche Intelligenz;

Schritt 160: Verwerfen oder niedrigeres Gewichten eines Datensatzes, falls der Algorithmus oder die künstliche Intelligenz feststellt, dass der Datensatz von der künstlichen Intelligenz oder einer anderen künstlichen Intelligenz erzeugt wurde oder der Datensatz Überschneidungen mit anderen Datensätzen aufweist;

Der entsprechend modifizierte Datensatz kann dann an die künstliche Intelligenz 170 zum Training übergeben werden.

Es ist demnach ein Aspekt der Erfindung einen unerwünschten Einfluss von ungeeigneten Datensätzen in der Trainingsphase der künstlichen Intelligenz 170 zu verhindern, indem Datensätze, die von der künstlichen Intelligenz 170 oder einer anderen künstlichen Intelligenz erzeugt wurden, signiert werden. In diesem Sinne ist die künstliche Intelligenz 170 zum Signieren von Datensätzen eingerichtet. Insbesondere von solchen Datensätzen, die die künstliche Intelligenz 170 als Output, auch als Antwort bezeichnet, als Reaktion auf eine Anfrage eines Nutzers erstellt.

In der Lernphase können diese Signierungen genutzt werden, um einen signierten Datensatz zu verwerfen oder ihm speziell niedriger zu gewichten. Ein entsprechender Signierschlüssel wird dem Betreiber der künstlichen Intelligenz von einer Trust Agency bereitgestellt, auf die sich insbesondere unterschiedliche Betreiber von verschiedenen künstlichen Intelligenzen geeinigt haben und die sich verpflichtet hat bestimmte Trust-Regeln für alle ihre Nutzer einzuhalten.

Die Signierung kann folgende Daten-Attribute aufweisen:

- Trust Agency;

- Version der künstlichen Intelligenz, insbesondere der generativen AI;

- Hersteller der künstlichen Intelligenz, insbesondere der generativen AI;

- Flag "ja/nein" als Antwort auf Prompt ohne Sprachumsetzung;

- Flag "ja/nein" als reine Übersetzung von Sprache A zu Sprache B; und/oder

- Klassifikationsfaktor;

Diese Daten-Attribute können auch für die Entscheidungsfindung verwendet werden, ob der entsprechende Datensatz verworfen oder niedriger gewichtet werden soll. Beispielsweise kann ab einer bestimmten Version der künstlichen Intelligenz und/oder einem bestimmten Hersteller eine andere Gewichtung des Datensatzes realisiert werden.

Der Datensatz, insbesondere die digitale Signatur, kann insbesondere weitere Gütekriterien bezüglich der Geeignetheit des Datensatzes aufweisen. Diese können auch in den Daten-Attributen enthalten sein. Beispielsweise, ob es sich um einen verifizierten Nobelpreistext handelt.

Eine Prüfung auf zu häufige Wiederholung des gleichen Datensatzes oder der gleichen langen Wortsequenzen kann ähnlich berücksichtigt werden, nämlich, dass in der Lernphase eine Vorverarbeitung der Daten, die Daten auf mehrfaches Vorkommen n prüft und dann (n-1) dieser Datensätze verworfen oder jedem der n Datensätze ein geringeres Gewicht in Abhängigkeit der Anzahl gleicher Dateien oder gleicher langer Wortsequenzen zugeordnet wird. Wie auf welchem Layer die AI Gewichte genutzt werden kann applikationsspezifisch sein, die Veränderung der Gewichte, kann durch Multiplikation mit einem geeigneten Faktor k umsetzbar sein, den jede Applikation für sich selbst definieren muss, je nachdem wie viele Layer und welche Kanalverbindungen (Channel) genutzt werden und wie die entsprechenden Aktivierungsfunktionen definiert sind.

Bspw.: Multiplikation eines bisherigen Gewichts

$$Gewicht\_neu = Gewicht * k$$

worin k < 1 als Funktion der Anzahl n an identischen Daten mit k ist eine Funktion der Anzahl an Wiederholungen und Wortsequenzlängen.

Entsprechend der Behandlung von Wiederholungen im Input könnten auch Gütekriterien einzelner Dateien, die bereits durch die Signierung festgelegt wurden (z.B. Nobelpreisarbeit mit hoher/höchster Gewichtung) gleichartig behandelt werden indem die Gewichte verändert werden mit

Gewicht_neu=Gewicht * Klassifikationsfaktor, worin 0 < Klassifikationsfaktor < 1000 mit z.B. Nobelpreisarbeit Klassifikationsfaktor=1000. Ein solches attributives Gütekriterium im Signierschlüssel könnte dann z.B. die Trust Agency durch eine spezielle Prüfung und Signierung vergeben.

Man kann dann die Bezeichnung einer "Trusted Generative AI" einführen, die dadurch ausgezeichnet ist nur Daten in der Lernphase zu nutzen, die nicht aus einer "Generative AI" entstanden sind und die sich verpflichtet hat, die Regeln der Trust Agency einzuhalten. Diese Regeln könnten auch die anderen Qualitätskriterien enthalten, sofern von den Generative AI Applikationen leistungsmäßig umsetzbar.

Die Signierung des Output Datensatzes kann als Funktion des Kerns der Generative AI definiert sein, also in der Einheit vorliegen, die auch das Modell f() umfasst. Der Grund hierfür ist, dass eine Generative AI als Output auch weitere Generative AI Applikationen erzeugen kann, nämlich den Code hierzu, und diese Applikationen sich ebenfalls genauso verhalten sollten wie die erzeugenden Applikationen.

**Patentansprüche**

1. Verfahren zur Verbesserung von Modellen einer künstlichen Intelligenz, insbesondere einer generativen AI, umfassend die folgenden Schritte:

   • Vorhalten eines Modells f einer künstlichen Intelligenz, wobei das Modell f trainiert werden soll, insbesondere zum Erzeugen einer neuen Version;
   • Vorhalten von Datensätzen zum Trainieren des Modells f;
   • Analysieren der Datensätze im Hinblick auf Ihre Geeignetheit für das Training durch einen Algorithmus oder die künstliche Intelligenz;
   • Verwerfen oder niedrigeres Gewichten eines Datensatzes, falls der Algorithmus oder die künstliche Intelligenz feststellt, dass der Datensatz von der künstlichen Intelligenz oder einer anderen künstlichen Intelligenz erzeugt wurde oder der Datensatz Überschneidungen mit anderen Datensätzen aufweist.

2. Verfahren nach Anspruch 1, wobei anhand einer digitalen Signatur des Datensatzes feststellbar ist, dass der Datensatz von der künstlichen Intelligenz oder der anderen künstlichen Intelligenz erzeugt wurde.

3. Verfahren nach Anspruch 2, wobei die künstliche Intelligenz oder die andere künstliche Intelligenz den Datensatz, insbesondere direkt bei seiner Erzeugung, signiert.

4. Verfahren nach einem der Ansprüche 2 bis 3, wobei die künstliche Intelligenz oder die andere künstliche Intelligenz den Datensatz nur dann signiert, wenn dieser abgespeichert wird.

5. Verfahren nach einem der Ansprüche 2 bis 3, wobei die digitale Signierung eine minimale Datengröße aufweist.

6. Verfahren nach Anspruch 2, wobei die digitale Signatur von einer Trust Agency an den Betreiber der künstlichen Intelligenz oder einer anderen künstlichen Intelligenz geliefert wird.

7. Verfahren nach Anspruch 1, wobei der Algorithmus oder die künstliche Intelligenz für den Datensatz, insbesondere einen Datensatz ohne Signatur, einen KI-Wahrscheinlichkeitswert ermittelt, wobei der KI-Wahrscheinlichkeitswert angibt, mit welcher Wahrscheinlichkeit der Datensatz von der künstlichen Intelligenz oder einer anderen künstlichen Intelligenz erzeugt wurde, wobei der Datensatz verworfen oder niedriger gewichtet wird, wenn der KI-Wahrscheinlichkeitswert einen Schwellenwert überschreitet.

8. Verfahren nach Anspruch 1, wobei der Algorithmus oder die künstliche Intelligenz für den Datensatz, insbesondere einen Datensatz ohne Signatur, einen Wiederholungs-Wahrscheinlichkeitswert ermittelt, wobei der Wiederholungs-Wahrscheinlichkeitswert angibt, mit welcher Wahrscheinlichkeit der Datensatz eine inhaltliche Wiederholung mit den anderen Datensätzen aufweist, wobei der Datensatz verworfen oder niedriger gewichtet wird, wenn der Wiederholungs-Wahrscheinlichkeitswert einen Schwellenwert überschreitet.

9. Verfahren nach Anspruch 1, wobei eine Entscheidung über das Verwerfen oder das niedrigere Gewichten in Abhängigkeit von dem Skill der künstlichen Intelligenz getroffen wird, der trainiert werden soll.

10. Computersystem zur Verbesserung von Modellen einer künstlichen Intelligenz, wobei das Computersystem eingerichtet ist zur Ausführung der Schritte des Verfahrens nach einem der Ansprüche 1 - 9.

11. Künstliche Intelligenz, **dadurch gekennzeichnet, dass** die künstliche Intelligenz eingerichtet ist von ihr erzeugte Datensätze bei der Erstellung dieser Datensätze zu signieren, wobei die Signatur ein Datenattribut aufweist, das aussagt, dass der Datensatz von der künstlichen Intelligenz erzeugt wurde.

100

105

125

130

140

150

160

170

Fig. 1

110

120

Europäisches
Patentamt

European
Patent Office

Office européen
des brevets

# EUROPÄISCHER RECHERCHENBERICHT

**Nummer der Anmeldung**

EP 24 20 7361

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Radford Alec ET AL: "Robust Speech Recognition via Large-Scale Weak Supervision", 6. Dezember 2022 (2022-12-06), XP093253742, Seiten 1-28, | 1-10 | INV. G06N3/0475 G06N3/09 |
| A | * das ganze Dokument * | 11 | |
| X | Kirchenbauer John ET AL: "A Watermark for Large Language Models", 6. Juni 2023 (2023-06-06), XP093253794, Seiten 1-26, | 11 | |
| A | * Abstract, 1. Introduction, 2. A simple proof of concept * | 1-10 | |
| A | XIANJUN YANG ET AL: "A Survey on Detection of LLMs-Generated Content", ARXIV.ORG, CORNELL UNIVERSITY LIBRARY, 201 OLIN LIBRARY CORNELL UNIVERSITY ITHACA, NY 14853, 24. Oktober 2023 (2023-10-24), XP091643107, * Abstract, 1. Introduction, 2. Problem formulation, 3. Detection scenarios, 4. Detection methodologies * | 1-11 | |
| A | Antoun Wissam ET AL: "From Text to Source: Results in Detecting Large Language Model-Generated Content", 23. September 2023 (2023-09-23), XP093253798, Seiten 1-12, * Abstract, 1. Introduction, 3. Methodology * | 1-11 | |

**RECHERCHIERTE SACHGEBIETE (IPC)**

G06N

-/--

Der vorliegende Recherchenbericht wurde für alle Patentansprüche erstellt

| Recherchenort | Abschlußdatum der Recherche | Prüfer |
|---|---|---|
| Den Haag | 4. März 2025 | Moro Pérez, Gonzalo |

Europäisches
Patentamt

European
Patent Office

Office européen
des brevets

**EUROPÄISCHER RECHERCHENBERICHT**

Nummer der Anmeldung

EP 24 20 7361

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JONAS GOLDE ET AL: "Fabricator: An Open Source Toolkit for Generating Labeled Training Data with Teacher LLMs", ARXIV.ORG, CORNELL UNIVERSITY LIBRARY, 201 OLIN LIBRARY CORNELL UNIVERSITY ITHACA, NY 14853, 18. September 2023 (2023-09-18), XP091616956, * Abstract, 1. Introduction, 2. Fabricator * | 1-11 | |

- - - - -

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 4. März 2025 | Moro Pérez, Gonzalo |

EPO FORM 1503 03.82 (P04C03)

Seite 2 von 2